# FASCICULE DE BREVET EUROPEEN

(11) **EP 1 178 405 B1**
(45) Date de publication et mention de la délivrance du brevet: **10.09.2008**
(21) Numéro de dépôt: 01401829.5
(22) Date de dépôt: 09.07.2001
(51) Int. Cl.: G06F 9/46, G07F 7/10, H04Q 7/32

(54) **Procédé de sécurisation de l'accès à une application résidante sur une carte utilisateur coopérant avec un terminal d'un système de communication, et terminal correspondant**
Verfahren zur sicheren Benutzung eines Anwendungsprogramms einer Benutzerkarte eines Endgerätes eines Kommunikationssystems sowie zugehöriges Endgerät
Method for controlling access to an application residing on an user card cooperating with a terminal of a communications system, and corresponding terminal

(30) Priorité: 31.07.2000 FR 0010088
(43) Date de publication de la demande: 06.02.2002
(73) Titulaire: Alcatel Lucent, 75008 Paris (FR)
(72) Inventeur: Durand, Romain, 75008 Paris (FR); Helaine, Hubert, Berkshire RG5 4UH (GB)
(74) Mandataire: El Manouni, Josiane

(56) Documents cités:
- WO-A-98/52159
- US-A- 6 092 133

## Description

La présente invention concerne un procédé de sécurisation de l'accès à au moins une application supportée par une carte utilisateur à microprocesseur. Cette carte utilisateur coopère avec un des terminaux de communication d'un système de communication. L'invention concerne également un terminal de communication mettant en oeuvre ce procédé.

Un des domaines d'application, non exclusif, de l'invention est celui des terminaux mobiles de radiocommunication fonctionnant dans un système de radiocommunication cellulaire. L'invention s'applique notamment, mais non exclusivement, à un système selon le standard GSM (Groupe spécial Systèmes Mobiles publics de radiocommunication).

Les terminaux d'un système de radiocommunication peuvent coopérer avec au moins une carte à puce intelligente, appelée en anglais "smart card". Chaque carte à puce contient au moins une application interne. Chaque application interne est susceptible de coopérer avec une application externe à la carte à puce. Par exemple, l'application externe peut être une application bancaire coopérant avec une carte utilisateur de type carte de paiement supportant l'application bancaire correspondante.

De plus, lorsqu'une application externe désire accéder à l'application interne correspondante supportée par la carte à puce, cette application externe commence le protocole de connexion. Elle échange des données dites APDU (Applicative Protocol Data Unit en anglais : Unité d'échange de données de niveau applicatif) via l'interface logicielle du terminal ou API ( Application Programming interface en anglais : Interface de programmation de et vers l'application). Dans l'APDU, l'application externe indique son type (bancaire, ou autres) ou classe. Cette classe est indiquée dans l'un des octets de l'APDU, appelé octet "CLA".

Le concept de plusieurs applications réunies sur une même carte est très avantageux pour l'abonné. En effet, celui-ci peut effectuer de façon simple et uniquement avec son terminal de nombreuses opérations telles que le paiement d'une commande effectuée également depuis son terminal.

Ainsi, plusieurs applications externes différentes peuvent avoir accès simultanément aux applications internes correspondantes sur la même carte à puce. Mais deux applications externes identiques ne doivent pas avoir accès simultanément à l'application interne correspondante sur la "smart card".

Cette restriction d'accès doit être possible pour pallier les risques d'utilisation frauduleuse des applications de la carte à puce. Dans le cas d'une transaction entre une application externe bancaire et l'application bancaire de la carte à puce d'un abonné, une transaction entre une application pirate de type bancaire demandant l'accès à la "smart card" de l'abonné doit être évitée.

D'autre part, au sein d'une carte à puce contenant plusieurs applications internes différentes, l'étanchéité entre les différentes applications internes est difficilement garantie. Ainsi, prenons le cas d'une première application externe X est déjà en communication avec l'application interne X correspondante située sur la carte à puce. Si une application externe pirate X' veut communiquer avec l'application interne X, alors l'application X' pourrait se connecter sur une application interne Y située dans la carte à puce à proximité de l'application interne X. Puis cette application X' pourrait profiter d'un éventuel manque d'étanchéité entre les applications internes pour atteindre l'application interne X.

Dans l'état de la technique, on connaît le modèle du tout ou rien. Ce modèle fonctionne par exemple sur les équipements tel que les terminaux de communication permettant l'accès à internet ou "internet communication terminal" en anglais. Sur ce genre de terminaux, des applications peuvent être téléchargées de l'extérieur.

Si le protocole de connexion utilisé par l'application externe est connu par le terminal alors l'application externe est dite "application autorisée" et peut accéder à l'application interne correspondante de la carte à puce. Cependant, si une autre application externe autorisée, et ayant la même classe que la première, demande l'accès à la même application interne de la carte à puce, la deuxième application peut également accéder à la même application interne sur la carte à puce et une interférence entre les deux applications externes a lieu.

Selon Le document de fort antérieur US-A-6 092 133, le microprocesseur est réserve pour une seule application extérieure. L'inconvenient d'une telle solution est de bloquer l'accès de toutes les outres applications extérieures sans prendre en compte le type d'une telle application.

Les solutions antérieures ne sont donc pas suffisantes pour pallier les risques évoqués ci-dessus.

L'invention résout ce problème en permettant à une application externe de réserver l'accès à l'application interne correspondante de la carte utilisateur pour elle seule.

De manière plus précise, l'invention a pour objet un procédé pour sécuriser l'accès d'une application externe à au moins une carte utilisateur à microprocesseur.

Ladite carte utilisateur est susceptible de contenir plusieurs applications internes, ladite application externe correspondant à une des applications internes.

Ladite carte utilisateur coopère avec un terminal.

Ladite application externe utilise un protocole de connexion à ladite carte utilisateur dans lequel, à chaque type d'application externe est associé un paramètre d'identification prédéterminé. Ce procédé comporte les étapes suivantes :
- lorsqu'une première application externe est en connexion avec l'application interne correspondante sur ladite carte utilisateur, on détermine le paramètre d'identification de l'application,
- si une deuxième application externe requiert la connexion à ladite carte utilisateur, on analyse le paramètre d'identification de ladite deuxième application,
- si ledit paramètre d'identification est identique à celui de la première application connectée, on interdit l'accès pour ladite deuxième application externe à ladite application interne correspondante sur la carte utilisateur.

En particulier, le procédé comporte un protocole de connexion entre l'application externe et l'application interne correspondante sur la carte utilisateur. Ce protocole résulte d'un échange d'APDU, contenant plusieurs octets, entre l'application externe et l'application interne située sur la carte utilisateur via l'interface logicielle du terminal, ledit paramètre d'identification étant représenté par au moins l'un des octets de l'APDU.

Le procédé comporte un protocole de connexion pendant lequel a lieu un échange d'APDU tel qu'au moins l'un des octets de l'APDU est l'octet CLA définissant la classe de l'application externe, chaque type d'application externe identique, susceptible de pouvoir échanger des APDU ayant un octet CLA identique, ledit paramètre d'identification étant l'octet CLA.

Le procédé est tel que l'application externe d'une classe définie ayant effectué une réservation totale de l'accès à au moins une carte utilisateur, l'analyse dudit paramètre d'identification par l'interface logicielle sera effectuée sur toutes les classes possibles qui définissent une application externe.

D'autres caractéristiques et avantages de l'invention apparaîtront à la lecture de la description suivante se rapportant à un mode de réalisation donné à titre d'exemple mais en aucun cas limitatif. Ce mode de réalisation fait référence aux dessins annexés.
La figure 1 est un schéma synoptique d'une donnée de type APDU.
La figure 2 est un schéma synoptique simplifié du dispositif selon l'invention mettant en oeuvre le procédé de sécurisation d'accès selon l'invention.
La figure 3 est un organigramme du procédé de sécurisation de l'accès selon l'invention.

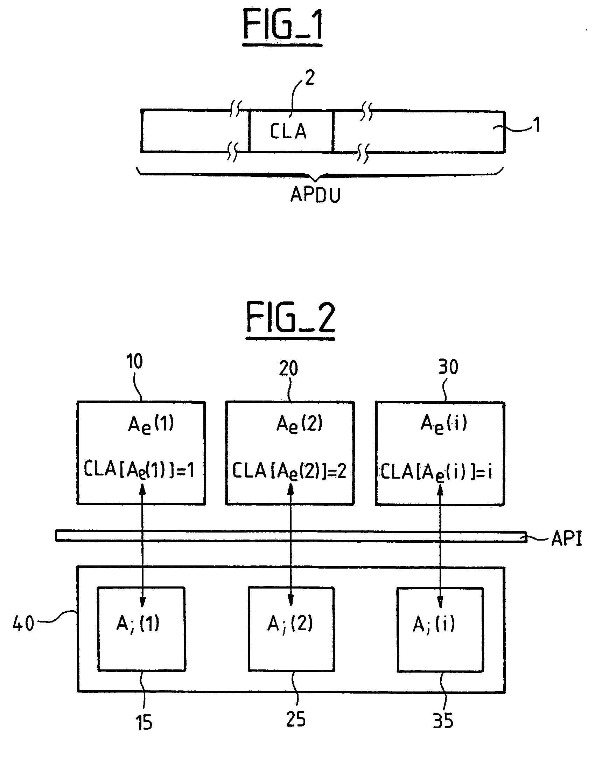

En référence à la figure 1, lorsqu'une application externe désire accéder à l'application interne correspondante supportée par la carte à puce située dans un terminal d'un système de radiocommunication, cette application commence le protocole de connexion et échange des données dites APDU 1 avec le terminal. Cet APDU contient plusieurs octets. L'un de ces octets est l'octet CLA 2. Cet octet indique la classe de l'application externe. Deux applications externes de même type ont la même classe, par exemple deux applications de type bancaire.

En référence à la figure 2, chaque terminal d'un système de radiocommunication coopère avec au moins une carte à puce 40. Chaque carte à puce 40 peut contenir plusieurs applications internes correspondant 15, 25, 35 à des applications externes 10, 20, 30.

Chaque application externe Ae(i) d'un type donné possède une classe donnée telle que CLA[Ae(i)]=i.

Deux applications externes Ae(1) et Ae(2) 10 et 20 de type différent, donc de classe différente, auront un octet CLA de valeur différente CLA[Ae(1)]=1 et CLA[Ae(2)]=2.

Cette application externe peut être locale, telle l'application GSM d'un terminal GSM; ou peut être distante telle une application bancaire communiquant avec l'application bancaire de la "smart card".

Dans ce qui suit, on entend par "blocage total", ce blocage total de l'accès à l'API donc à la carte à puce ayant été requis par une application externe, l'interdiction de l'accès à la carte à puce pour n'importe quelle autre application externe quelque soit sa classe.

On entend également par "blocage partiel", ce blocage partiel de l'accès à l'API donc à la carte à puce ayant été requis par une première application externe, l'interdiction de l'accès à la carte à puce pour une deuxième application externe de même classe que la première.

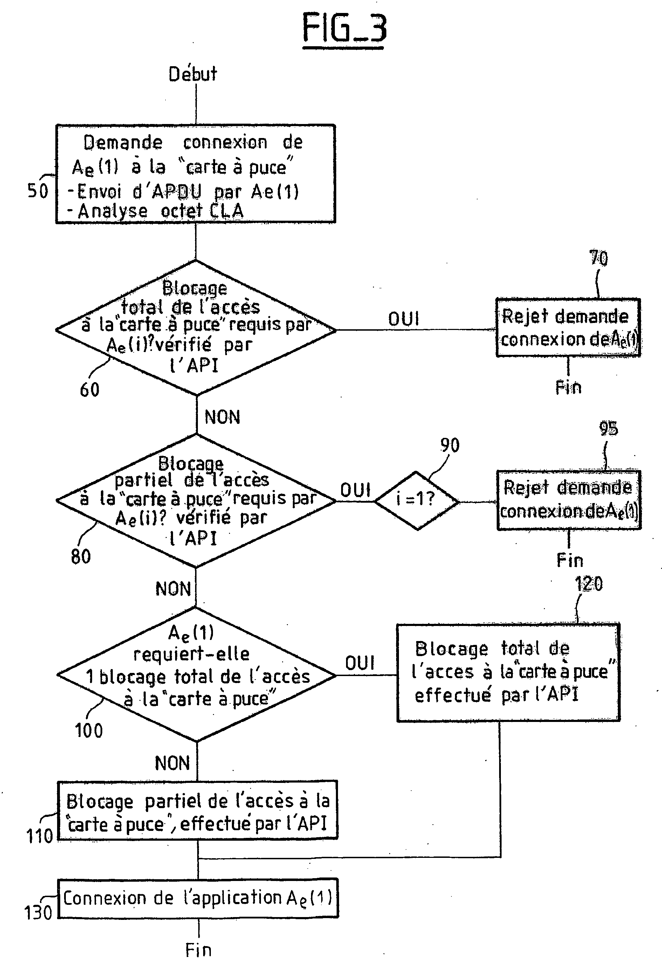

Sur la figure 3, dans l'étape 50, une application externe Ae(1) demande l'accès à l'application interne Ai(1) contenue dans une carte à puce d'un terminal d'un système de radiocommunication. Cette application externe envoie des données de type APDU pendant le protocole de connexion via l'interface logicielle du terminal (API). A cette application externe est associé un paramètre d'identification prédéterminé : l'octet CLA contenu dans l'APDU et tel que CLA[Ae(1)]=1. On analyse la valeur de l'octet CLA.

Ensuite, dans l'étape 60, l'API vérifie si l'accès à la "smart card" est bloqué par une autre application externe Ae(i) qui aurait demandé le blocage de l'accès à la carte à puce pour une autre application quelle que soit sa classe (ce qui constitue le blocage total) :
Si c'est le cas, alors on passe à l'étape 70 et la demande est rejetée.
Si ce n'est pas le cas, alors on passe à l'étape 80.

Dans l'étape 80, l'API vérifie si l'accès à la carte à puce est bloqué par une autre application externe Ae(i) ayant demandé un blocage partiel pour toute application de même classe, c'est-à-dire dont l'octet CLA a pour valeur CLA[Ae(i)]=i :
Si c'est le cas, alors on passe à l'étape 90 où l'API analyse si i= 1 :
   Si i=1 (les deux applications sont de même classe) alors la demande de connexion de Ael est rejetée.
   Si i < > 1 (les deux applications sont de classes différentes) alors on passe à l'étape 110.
Si ce n'est pas le cas, alors on passe à l'étape 100.

Dans l'étape 100, l'application externe doit demander à l'API si elle désire un blocage total avant de passer à l'étape 130 :
Si ce n'est pas le cas, alors l'accès à la carte à puce sera bloqué pour toute application externe de même classe que l'application Ae(1) donc ayant un octet CLA égal à 1 dans l'étape 110 (réservation partielle de l'API).
Si c'est le cas, alors l'accès à la carte à puce sera bloqué pour toute application externe quelle que soit sa classe dans l'étape 120 (réservation totale de l'API).

Dans l'étape 130, l'application Ae(1) accède à l'application interne correspondante Ai(1) de la carte à puce.

## Revendications

1. Procédé pour sécuriser l'accès d'une application externe à au moins une carte utilisateur à microprocesseur, ladite carte utilisateur étant susceptible de contenir plusieurs applications internes, ladite application externe correspondant à une des applications internes, ladite carte utilisateur coopérant avec un terminal, ladite application externe utilisant un protocole de connexion à ladite carte utilisateur dans lequel, à chaque type d'application externe est associé un paramètre d'identification prédéterminé, **caractérisé en ce que** :
- lorsqu'une première application externe (Ae (1)) est en connexion avec l'application interne (Ai (1)) correspondante sur ladite carte utilisateur, on détermine le paramètre d'identification de l'application, externe,
- si une deuxième application externe requiert la connexion à ladite carte utilisateur, on analyse le paramètre d'identification de ladite deuxième application,
- si ledit paramètre est identique à celui de la première application connectée, on interdit l'accès pour ladite deuxième application externe à ladite application interne correspondante sur la carte utilisateur.

2. Procédé selon la revendication précédente, dans lequel :
le protocole de connexion entre l'application externe et l'application interne correspondante sur la carte utilisateur résulte d'un échange d'APDU, contenant plusieurs octets, entre l'application externe et l'application interne située sur la carte utilisateur via l'interface logicielle du terminal, ledit paramètre d'identification étant représenté par au moins l'un des octets de l'APDU.

3. Procédé selon la revendication **2,** dans lequel :
au moins l'un des octets de l'APDU est l'octet CLA définissant la classe de l'application externe, chaque type d'application externe identique, susceptible de pouvoir échanger des APDU ayant un octet CLA identique, ledit paramètre d'identification étant l'octet CLA.

4. Procédé selon l'une quelconque des revendications **2 et 3, caractérisé en ce que** l'application externe d'une classe définie ayant effectué une réservation totale de l'accès à au moins une carte utilisateur, l'analyse dudit paramètre d'identification par l'interface logicielle sera effectuée sur toutes les classes possibles qui définissent une application externe.

5. Procédé selon l'une quelconque des revendications précédentes, fonctionnant dans un système de communication permettant une radiocommunication cellulaire, dans lequel lesdits terminaux de communication sont des terminaux de radiocommunication et lesdites cartes utilisateur sont des cartes à puce.

6. Terminal de radiocommunication coopérant avec au moins une carte utilisateur à microprocesseur pour la mise en oeuvre du procédé selon l'une quelconque des revendications précédentes, **caractérisé en ce qu'**il comporte des moyens d'exécution de commandes distincts, des moyens de mémorisation de données distincts pour chaque application de classe distincte et des moyens d'analyse d'au moins un paramètre d'identification contenu dans les données échangées pendant le protocole de connexion.

## Claims

1. A method of securing access by an external application to at least one user card having a microprocessor, said user card being capable of containing a plurality of internal applications, said external application corresponding to one of the internal applications, said user card co-operating with a terminal, said external application using a protocol for connection to said user card in which each type of external application is associated with a predetermined identity parameter, the method being **characterized in that**:
- when a first external application Ae(1) is connected with the corresponding internal application Ai(1) on the user card, the identity parameter of the external application is determined,
- if a second external application requests connection to said user card, the identity parameter of said second application is analyzed; and
- if said parameter is identical to that of the first-connected application, then access to said corresponding internal application on the user card is denied to said second external application.

2. A method according to the preceding claim, in which: the protocol for connection between the external application and the corresponding internal application on the user card results in an APDU exchange containing a plurality of bytes between the external application and the internal application situated on the user card via the software interface of the terminal, said identity parameter being represented by at least one of the bytes of the APDU.

3. A method according to claim 2, in which: at least one of the bytes of the APDU is the CLA byte defining the class of the external application, each identical external application capable of exchanging APDUs having an identical CLA byte, and said identity parameter being the CLA byte.

4. A method according to claim 2 or claim 3, **characterized in that** once the external application of a defined class has implemented total reservation of access to at least one user card, analysis of said identity parameter by the software interface is performed on all possible classes that define an external application.

5. A method according to any preceding claim, operating in a communications system enabling cellular radio communication to be performed, in which said communication terminals are radio communication terminals and said user cards are smart cards.

6. A radio communication terminal co-operating with at least one user card having a microprocessor for implementing the method according to any preceding claim, the terminal being **characterized in that** it includes means for executing distinct commands, distinct data storage means for each application of a distinct class, and means for analyzing at least one identity parameter contained in the data exchanged during the connection protocol.

## Patentansprüche

1. Verfahren zum sicheren Zugriff eines externen Anwendungsprogramms auf mindestens eine Benutzerkarte mit Mikroprozessor, wobei die besagte Benutzerkarte mehrere interne Anwendungen enthalten kann, wobei das besagte externe Anwendungsprogramm einer der internen Anwendungen entspricht, wobei die besagte Benutzerkarte mit einem Endgerät zusammenarbeitet, wobei das externe Anwendungsprogramm ein Verbindungsprotokoll für die Verbindung mit der besagten Benutzerkarte verwendet, in welchem jedem Typ eines externen Anwendungsprogramms ein vorbestimmer Identifizierungsparameter zugeordnet ist, **dadurch gekennzeichnet, dass**:
- wenn ein erstes externes Anwendungsprogramm (Ae(1)) mit der entsprechenden internen Anwendung (Ai(1)) auf der besagten Benutzerkarte verbunden ist, der Identifizierungsparameter des externen Anwendungsprogramms bestimmt wird,
- wenn ein zweites externes Anwendungsprogramm die Verbindung mit der besagten Benutzerkarte erfordert, der Identifizierungsparameter des besagten zweiten Anwendungsprogramms analysiert wird,
- wenn der besagte Parameter mit dem des ersten verbundenen Anwendungsprogramms identisch ist, dem besagten zweiten externen Anwendungsprogramm der Zugriff auf die besagte entsprechende interne Anwendung auf der Benutzerkarte verwehrt wird.

2. Verfahren nach dem vorstehenden Anspruch, worin:
das Verbindungsprotokoll zwischen dem externen Anwendungsprogramm und der entsprechenden internen Anwendung auf der Benutzerkarte aus einem Austausch der APDU, welche mehrere Bytes enthält, zwischen dem externen Anwendungsprogramm und der internen Anwendung auf der Benutzerkarte über eine logische Schnittstelle des endgerätes entsteht, wobei der Identifizierungsparameter von mindestens einem der Bytes der APDU repräsentiert wird.

3. Verfahren nach Anspruch 2, worin:
mindestens eines der Bytes der APDU das CLA-Byte ist, welches die Klasse des externen Anwendungsprogramms definiert, wobei jeder identische Typ eines externen Anwendungsprogramms, welcher fähig ist, APDUs auszutauschen, ein identisches CLA-Byte hat, wobei der besagte Identifizierungsparameter das CLA-Byte ist

4. Verfahren nach einem beliebigen der Ansprüche **2 und 3**. **dadurch gekennzeichnet, dass** das externe Anwendungsprogramm einer bestimmten Klasse den Zugriff auf mindestens eine Benutzerkarte komplett reserviert hat, wobei die Analyse des besagten Identifizierungsparameters durch die logische Schnittstelle für alle möglichen Klassen, welche ein externes Anweridungsprogramms definieren, durchgeführt wird.

5. Verfahren nach einem beliebigen der vorstehenden Ansprüche, welches in einem Kommunikationssystem, in dem eine zellulare Funkkommunikation möglich ist, eingesetzt wird, worin die besagten Kommunikationsendgeräte Funkkommunikations-Endgeräte und die besagten Benutzerkarten Chipkarten sind.

6. Funkkommunikations-Endgerät. welches mit mindestens einer Benutzerkarte mit Mikroprozessor zusammenarbeitet, für die Durchführung des Verfahrens nach einem beliebigen der vorstehenden Ansprüche, **dadurch gekennzeichnet, dass** es mindestens verschiedene Befehtsausführutigsmittel, verschiedene Datenspeicherungsmittel für jede Anwendung einer bestimmten Klasse, und Mittel zur Analyse von mindestens einem der in den während des Verbindungsprotokolls ausgetauschten Daten enthaltenen Identifizierungspararmeter umfasst.
